# EUROPÄISCHE PATENTANMELDUNG

(11) **EP 1 494 474 A2**
(43) Veröffentlichungstag der Anmeldung: **05.01.2005**
(21) Anmeldenummer: 04014001.4
(22) Anmeldetag: 15.06.2004
(51) Int. Cl.: H04N 7/00, H04N 7/52, H04N 7/088

(54) **Verfahren zur Darstellung von Teletextseiten auf einer Anzeigevorrichtung**

(30) Priorität: 04.07.2003 DE 10330329
(71) Anmelder: Micronas GmbH, 79108 Freiburg (DE)
(72) Erfinder: Höck, Günter, 83673 Bichl (DE); Abler, Michael, 80061 München (DE); Bartholomä, Thomas, 81671 München (DE); Mauser, Manfred, 82544 Egling (DE)
(74) Vertreter: Bickel, Michael

(57) **Zusammenfassung**

Die vorliegende Erfindung betrifft ein Verfahren zur Darstellung von Teletextinformationen in einem bildpunktweise aufgebauten Bild einer Anzeigevorrichtung, wobei das Verfahren folgende Verfahrensschritte umfasst:
- Bereitstellen eines eine Folge von Teletextzeichen umfassenden Teletextsignals,
- Auswählen eines einem jeden kodierten Teletextzeichen zugeordneten, eine Matrix von Bildpunkten umfassenden Zeichens aus einem Zeichensatz,
- Darstellen der ausgewählten Zeichen bildpunktweise auf der Anzeigevorrichtung,
wobei ein erster und ein zweiter Zeichensatz bereitgestellt wird und die den kodierten Teletextzeichen zugeordneten Zeichen abhängig davon, ob Teletexseiten in vertikaler Richtung übereinanderliegend auf der Anzeigevorrichtung dargestellt werden sollen, aus dem ersten oder zweiten Zeichen ausgewählt werden.

## Beschreibung

Die vorliegende Erfindung betrifft ein Verfahren zur Darstellung von Teletextseiten auf einer Anzeigevorrichtung.

Heutzutage erhältliche Fernsehempfänger und Videorecorder enthalten Teltextverarbeitungseinheiten, die dazu dienen, Teletextsignale, die in der Austastlücke (Video Blanking Interval = VBI) eines sogenannten Farb-Bild-Austast-Signals (FBAS) übertragen werden, aus diesem FBAS-Signal abzutrennen und die Teletextinformationen seitenweise in einem Speicher abzulegen, wobei derartige Speicher dazu ausgebildet sein können, bis zu einige hundert Teletextseiten zu speichern, die auf Wunsch auf einem Bildschirm dargestellt werden können.

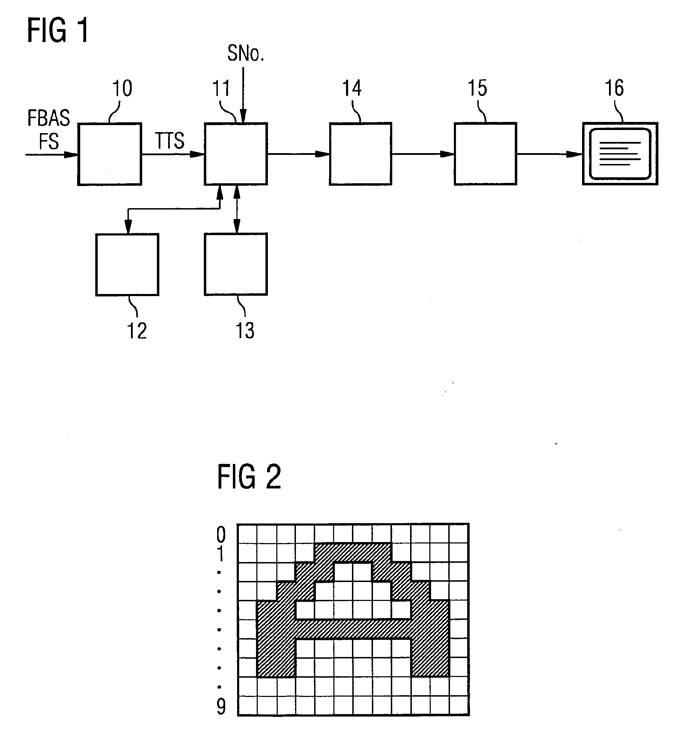

Figur 1 zeigt schematisch das Blockschaltbild einer herkömmlichen Teletextverarbeitungseinheit, die eine Abtrennstufe 10 zum Abtrennen des Teletextsignals aus dem FBAS-Signal und einen der Abtrennstufe nachgeschalteten Dekodierer 11 aufweist, dem ein Seitenspeicher 12 zum Speichern der empfangenen und dekodierten Teletextseiten zugeordnet ist.

Teletextdaten werden üblicherweise mit einer Datenrate von 6,9375 MHz übertragen, wobei zu jedem Zeichen einer Seite 7 Datenbits und ein Paritätsbit übertragen werden. Eine derartige binäre Datenfolge, die ein darzustellendes Zeichen, beispielsweise einen Buchstaben des Alphabets repräsentiert, wird im Folgenden als kodiertes Zeichen bezeichnet. Die Teletextdaten sind in Form solcher kodierter Zeichen in dem Speicher abgelegt.

In einer Zeile einer Teletextreihe sind üblicherweise 40 Zeichen darstellbar. Dies entspricht einem Datenvolumen von 320 Bit pro Reihe .. Eine Teletextseite umfasst üblicherweise 25 Reihen, die von 0 bis 24 nummeriert sind, wobei die Reihe 0 als Kopfzeile dient, die Reihen 1 bis 23 die von den Sendern übertragenen Textinformationen umfassen und die Reihe 24 zusätzliche Steuerinformationen, z.B. FLOF-Informationen (FLOF = Full Level One Features), wie FLOF-Informationen zur Seitennavigation, enthält, sofern diese vom Sender unterstützt werden.

Die einzelnen Zeichen einer Teletextseite werden auf dem Bildschirm als Matrix von Bildpunkten dargestellt, wobei bei heutigen Teltextdarstellungen, zu jedem Zeichen eine Bildpunktmatrix mit 12 x 10 Bildpunkten, also mit 10 Bildpunktzeilen und 12 Bildpunktspalten, dargestellt wird. Dabei ist jeder Bildpunkt durch eine RGB-Bildpunktinformation charakterisiert ist. Zur Darstellung einer Teletextseite wird jedem zu einer Seite abgespeicherten binär kodierten Zeichen eine das jeweilige Zeichen repräsentierende Bildpunktmatrix zugewiesen und die daraus resultierende Folge der einzelnen Bildpunktmatrizen wird bildpunktweise in einem an den Dekodierer angeschlossenen Speicher 14 abgelegt, der durch eine den Bildschirm 16 ansteuernde Einrichtung 15 auslesbar ist, um die einzelnen Zeichen auf dem Bildschirm 16 darzustellen.

In Figur 1 bezeichnet das Bezugszeichen 13 einen solchen Zeichenspeicher, in dem die den einzelnen darstellbaren Zeichen zugeordneten Bildpunktinformationen abgespeichert sind. Figur 2 veranschaulicht beispielhaft die dem darzustellenden Zeichen "A" zugeordnete Bildpunktmatrix mit 12 x 10 Bildpunkten, wobei aus Gründen der einfacheren Darstellbarkeit in dem Beispiel den einzelnen Bildpunkten lediglich die Farbinformation schwarz oder weiß anstelle einer RGB-Information zugeordnet ist.

Herkömmliche Fernsehbilder werden als Folge zeilenverkämmter Halbbilder übertragen und als Halbbilder auf dem Bildschirm dargestellt, wobei ein Halbbild im PAL TV-Standard 312,5 Bildzeilen umfasst, von denen 280 sichtbar sind, so dass bei Zeichen, die aus 10 Bildpunktzeilen aufgebaut sind, theoretisch 28 Teletextzeilen auf dem Bildschirm darstellbar sind. Unabhängig davon können einzelne Fernsehgeräte oder Fernsehempfänger selbstverständlich Interpolationseinrichtungen aufweisen, die dazu ausgebildet sind, aus einer Halbbildfolge, also auch aus einer Teletextinformationen erfassenden Halbbildfolge, eine Vollbildfolge zu erzeugen.

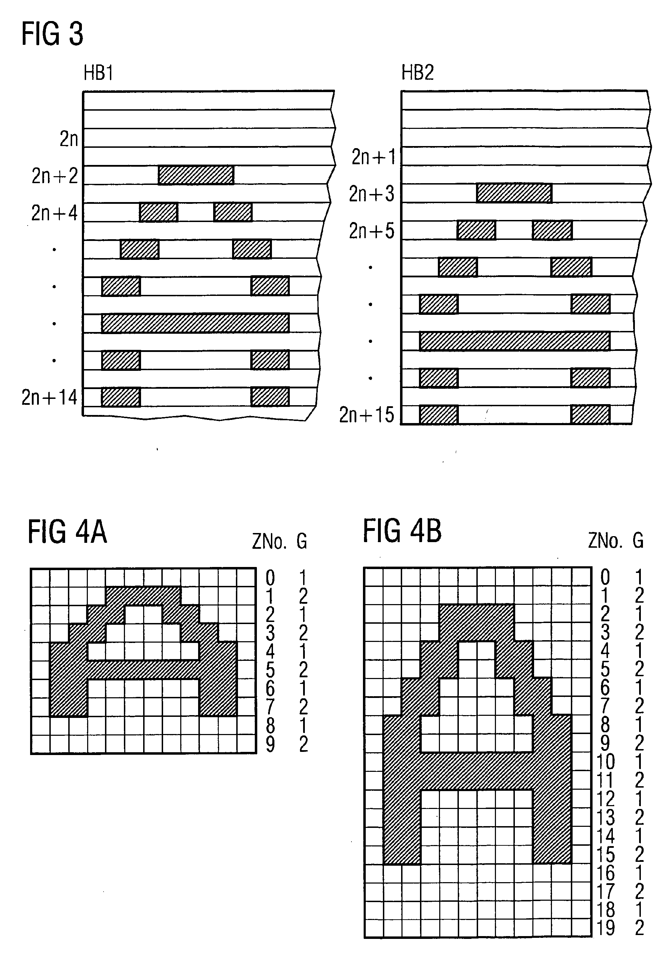

Bei herkömmlichen Verfahren zur Darstellung von Teletextinformationen werden in einer geradzahligen Zeile eines Halbbildes und in der der geradzahligen Zeile zugeordneten ungeradzahligen Zeile des nachfolgenden Halbbildes dieselben Bildpunktinformationen dargestellt. Mit anderen Worten: zwei aufeinanderfolgende Halbbilder unterscheiden sich lediglich in der Rasterlage, enthalten ansonsten jedoch eine identische Information. Dies ist in Figur 3 schematisch für die Darstellung des Zeichens "A" dargestellt, wobei in Figur das Halbbild HB1 die geradzahligen Zeilen und das darauffolgende Halbbild HB2 die ungeradzahligen Zeilen des Bildes umfasst. Dabei entspricht der Inhalt einer Zeile 2n+i des Halbbildes HB1 dem Inhalt der Zeile 2n+i+1 des Halbbildes HB2, wobei n eine ganzzahlige Zahl ist.

In der EP 0 561 028 B1 ist ein Verfahren zur Darstellung zweier Teletextseiten in horizontaler Richtung nebeneinanderliegend auf einem Bildschirm beschrieben, wobei das Verfahren vorsieht, die Bildpunktfrequenz bei der Darstellung von Teletextseiten zu erhöhen.

Ziel der vorliegenden Erfindung ist es, ein Verfahren zur Darstellung wenigstens zweier Teletextseiten in vertikaler Richtung auf einer Anzeigevorrichtung bzw. einem Bildschirm übereinanderliegend zur Verfügung zu stellen.

Dieses Ziel wird durch ein Verfahren gemäß der Merkmale des Anspruchs 1 gelöst. Vorteilhafte Ausgestaltungen des Verfahrens sind Gegenstand der Unteransprüche.

Bei dem erfindungsgemäßen Verfahren zur Darstellung von Teletextinformationen einer ersten und zweiten Teletextseite in vertikaler Richtung übereinanderliegend in einem bildpunktweise aufgebauten Bild auf einer Anzeigevorrichtung, ist vorgesehen, ein Teletextsignal bereitzustellen, das eine Folge kodierter Teletextzeichen umfasst, und einen ersten Zeichensatz mit einer Anzahl Zeichen bereitzustellen, die jeweils aus einer Matrix mit m x n Bildpunkten aufgebaut sind. Zu jedem kodierten Zeichen wird aus diesem Zeichensatz ein Zeichen ausgewählt und die ausgewählten Zeichen werden bildpunktweise auf der Anzeigevorrichtung dargestellt, wobei für die Darstellung eines Zeichens auf der Anzeigevorrichtung in den geradzahligen Zeilen des Bildes Bildpunktinformationen aus ersten Zeilen der Bildpunktmatrix des Zeichens dargestellt werden und bei dem in den ungeradzahligen Zeilen des Bildes Bildpunktinformationen aus zweiten Zeilen der Bildpunktmatrix des Zeichens dargestellt werden.

Die ersten Zeilen der Bildpunktmatrix eines Zeichens entsprechen dabei den geradzahligen Zeilen und die zweiten Zeilen der Bildpunktmatrix entsprechen den ungeradzahligen Zeilen, oder umgekehrt.

Diese Zuordnung der ersten Zeilen der Bildpunktmatrix eines Zeichens zu den geradzahligen Zeilen des darzustellenden Bildes und der zweiten Zeilen der Bildpunktmatrix zu den ungeradzahligen Zeilen des Bildes ist unabhängig davon, ob die Bilddarstellung im sogenannten Interlaced-Modus oder im sogenannten Progressive-Modus erfolgt. Im Interlaced-Modus wird zur Darstellung auf der Anzeigevorrichtung eine Halbbildfolge erzeugt, wobei zur Erzeugung der einzelnen aufeinanderfolgenden Halbbilder abwechselnd geradzahlige Zeilen und ungeradzahlige Zeilen des Bildes beschrieben werden. Im Progressive-Modus wird zur Darstellung auf der Anzeigevorrichtung eine Vollbildfolge erzeugt, wobei zur Erzeugung der einzelnen aufeinanderfolgenden Vollbilder sowohl geradzahlige Zeilen als auch ungeradzahlige Zeilen des Bildes beschrieben werden.

Bei dem erfindungsgemäßen Verfahren kann die Auflösung in vertikaler Richtung des Bildes gegenüber herkömmlichen Verfahren verdoppelt werden, so dass bei Verwendung eines herkömmlichen Zeichensatzes, der Zeichen mit 12 x 10 Bildpunkten umfasst, zur Darstellung von 28 Teletextzeilen nur noch 140 Halbbildzeilen oder 280 Vollbildzeilen benötigt werden, wodurch zwei Teletextseiten übereinander dargestellt werden können.

Zur Realisierung des Verfahrens ist vorzugsweise ein zeilenweise organisierter Speicher vorgesehen, in dem die Bildinformationen der einzelnen Bildpunkte der ausgewählten Zeichen, die die erste und zweite Teletextseite bilden, abgespeichert werden und der zur Darstellung der Zeichen auf der Anzeigevorrichtung ausgelesen wird . Die Anzahl der in dem Speicher abzuspeichernden Bildpunktinformationen entspricht dabei der auf dem Bildschirm darzustellenden Bildpunkte, so dass der Speicher ein "Abbild" der Anzeigevorrichtung darstellt.

Bei einer Ausführungsform der Erfindung ist vorgesehen, die Bildinformationen zu vier Teletextseiten auf einer Bildschirmseite darzustellen, nämlich jeweils zwei Teletextseiten übereinander und zwei Teletextseiten in horizontaler Richtung nebeneinander. Hieraus resultiert eine Vier-Quadranten-Darstellung, bei der in jedem der vier Quadranten des Bildes auf der Anzeigevorrichtung eine Teletextseite dargestellt ist.

Vorzugsweise ist zur Realisierung dieses Verfahrens ebenfalls ein zeilenweise organisierter Speicher vorgesehen, der so gewählt ist, dass die Bildinformationen von vier Teletextseiten abgespeichert werden können, die jeweils aus Zeichen des ersten Zeichensatzes aufgebaut sind. Dieser Speicher wird dabei mit einer solchen Frequenz ausgelesen, dass innerhalb einer Zeitdauer, während der eine Zeile des darzustellenden Bildes aufgebaut wird, die Bildinformationen aus je einer Bildzeile zweier auf dem Bildschirm nebeneinander darzustellender Teletextseiten ausgelesen werden.

Bei einer weiteren Ausführungsform des Verfahrens ist vorgesehen, eine einzige dritte Teletextseite in horizontaler Richtung des Bildes benachbart zu den ersten und zweiten vertikal übereinanderliegend angeordneten Teletextseiten darzustellen. Dieses Verfahren sieht vor, einen zweiten Zeichensatz mit einer Anzahl Zeichen, die aus jeweils einer Matrix von i x j Bildpunkten aufgebaut sind, vorzusehen und aus diesem Zeichensatz zu jedem kodierten Teletextzeichen der dritten Teletextseite ein Zeichen auszuwählen. Für die Darstellung eines Zeichens der dritten Teletextseite auf der Anzeigevorrichtung werden dabei in den geradzahligen Zeilen des Bildes Bildpunktinformationen aus ersten Zeilen der Bildpunktmatrix des Zeichens dargestellt, und in den ungeradzahligen Zeilen des Bildes werden Bildpunktinformationen aus zweiten Zeilen der Bildpunktmatrix des Zeichens dargestellt.

Auch hierbei sind die ersten Zeilen der Bildpunktmatrix vorzugsweise die geradzahligen Zeilen und die zweiten Zeilen die ungeradzahligen Zeilen, oder umgekehrt.

Bei einem Ausführungsbeispiel ist vorgesehen, dass m=i und n=2·j ist, so dass die einzelnen Zeichen des ersten und zweiten Zeichensatzes gleich viele Bildpunktspalten umfassen, sich bezüglich der Anzahl der Bildpunktzeilen jedoch um den Faktor 2 unterscheiden. Bei einem ersten Zeichensatz mit Zeichen, die 12 x 10 Bildpunkte umfassen, gilt für die Zeichen des zweiten Zeichensatzes dann, dass diese 12 x 20 Bildpunkte umfassen.

Bei diesem Ausführungsbeispiel werden zur Darstellung einer Reihe der ersten oder zweiten Teletextseite 10 Bildpunktzeilen benötigt, während zur Darstellung einer Reihe der dritten Teletextseite 20 Bildpunktzeilen benötigt werden, so dass die erste und zweite Teletextseite in vertikaler Richtung übereinanderliegend neben der genau einen dritten Teletextseite dargestellt werden kann, wobei die dritte Teletextseite in vertikaler Richtung denselben Raum auf dem resultierenden Bild einnimmt, wie die erste und zweite Teletextseite zusammen.

Bei dem Beispiel, bei dem m=i und n=2·j, insbesondere m=i=12 und n=20 bzw. j=10 gilt, können die Zeichen des zweiten Zeichensatzes aus beispielsweise bereits vorhandenen Zeichen des ersten Zeichensatzes auf einfache Weise beispielsweise dadurch gebildet werden, dass die Bildpunktinformationen einer Zeile eines Zeichens des ersten Zeichensatzes den Bildpunktinformationen in zwei aufeinanderfolgenden Zeilen der Bildpunktmatrix eines Zeichens des zweiten Zeichensatzes entsprechen. Die Erzeugung dieses zweiten Zeichensatzes mit beispielsweise 12 x 20 Bildpunkten muss selbstverständlich nur einmal erfolgen und der Zeichensatz dann abgespeichert werden.

Die vorliegende Erfindung wird nachfolgend anhand von Figuren näher erläutert. In den Figuren zeigt
- Figur 1: schematisch ein Blockschaltbild einer Teletextverarbeitungseinheit nach dem Stand der Technik,
- Figur 2: eine aus 12 x 10 Bildpunkten aufgebaute Bildpunktmatrix zur Darstellung eines Teletextzeichens, in dem Beispiel des Zeichens "A",
- Figur 3: schematische Veranschaulichung der Darstellung des Zeichens nach Figur 2 in einer Halbbildfolge mit zeilenverkämmten Halbbildern,
- Figur 4: beispielhafte Darstellung der Bildpunktmatrix eines Zeichens - in dem Beispiel des Zeichens "A" - eines ersten Zeichensatzes (Figur 4a) und eines Zeichens - in dem Beispiel des Zeichens "A" - eines zweiten Zeichensatzes (Figur 4b) zur Verwendung bei dem erfindungsgemäßen Verfahren,
- Figur 5: Veranschaulichung der Darstellung eines Zeichens des ersten Zeichensatzes in einer Halbbildfolge mit zeilenverkämmten Halbbildern (Figur 5a) und in einer Vollbildfolge (Figur 5b),
- Figur 6: Veranschaulichung der Darstellung eines Zeichens des zweiten Zeichensatzes in einer Halbbildfolge mit zeilenverkämmten Halbbildern (Figur 6a) und in einer Vollbildfolge (Figur 6b),
- Figur 7: schematische Darstellung einer Teletextverarbeitungseinrichtung zur Durchführung des erfindungsgemäßen Verfahrens,
- Figur 8: schematische Darstellung eines zwei in vertikaler Richtung übereinanderliegende Teletextseiten umfassenden Bildes,
- Figur 9: schematische Darstellung eines Bildes, das sowohl in vertikaler als auch in horizontaler Richtung zweigeteilt ist, wobei zwei Teletextseiten übereinander und benachbart zu den übereinander angeordneten Seiten einer weitere Teletextseite angeordnet ist,
- Figur 10: schematische Darstellung eines Bildes mit zwei übereinander angeordneten Teletextseiten und einer neben den übereinander angeordneten Teletextseiten angeordneten Teletextseite.

In den Figuren bezeichnen, sofern nicht anders angegebenen, gleiche Bezugszeichen gleiche Teile und Signale mit gleicher Bedeutung.

Ein wesentlicher Aspekt der vorliegenden Erfindung besteht darin, einen ersten Zeichensatz zur Verfügung zu stellen, wobei der erste Zeichensatz Zeichen umfasst, die aus einer Bildpunktmatrix mit jeweils m x n Bildpunkten bestehen.. Figur 4a zeigt beispielhaft die Bildpunktmatrix des Teletextzeichens "A" des ersten Zeichensatzes, wobei diese dargestellte Bildpunktmatrix 12 x 10 Bildpunkte umfasst.

Das in Figur 4a dargestellte Teletextzeichen und das nachfolgend noch erläuterte, in Figur 4b dargestellte Teletextzeichen sind selbstverständlich lediglich ein Beispiel für die darzustellenden Teletextzeichen eines Zeichensatzes, die wenigstens die Großbuchstaben des Alphabets und die gängigsten Interpunktionszeichen umfassen.

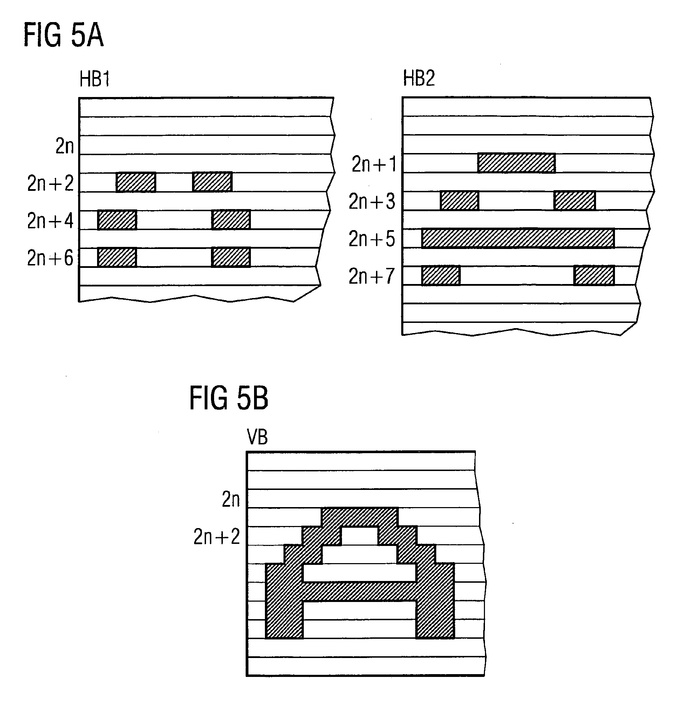

Anders als bei herkömmlichen Verfahren zur Darstellung von Teletextzeichen in einem Bild ist bei dem erfindungsgemäßen Verfahren vorgesehen, in den geraden Zeilen des bildpunktweise bzw. zeilenweise aufgebauten Bildes die Bildpunktinformationen erster Zeilen, beispielsweise der geradzahligen Zeilen, und in den ungeradzahligen Zeilen des Bildes die Bildpunktinformationen zweiter Zeilen, beispielsweise der ungeradzahligen Zeilen, der Bildpunktmatrix der einzelnen darzustellenden Zeichen darzustellen, wie dies nachfolgend in Figur 5 für das in Figur 4a dargestellte Zeichen des ersten Zeichensatzes ist.

In der Bildpunktmatrix gemäß Figur 4a bezeichnet ZNo die Zeilennummer der einzelnen Bildpunktzeilen des Zeichens, und G gibt an, ob die einzelnen Zeilen erste Zeilen oder zweite Zeilen der jeweiligen Bildpunktmatrix sind, wobei "1" für die ersten, in dem Ausführungsbeispiel geradzahligen Zeilen und "2" für die zweiten, in dem Ausführungsbeispiel ungeradzahligen Zeilen der Bildpunktmatrix des Zeichens steht.

In dem Ausführungsbeispiel wird davon ausgegangen, dass die geradzahligen Zeilen der Bildpunktmatrix eines Zeichens in geradzahligen Zeilen des Bildes dargestellt werden und das die ungeradzahligen Zeilen der Bildpunktmatrix eines Zeichens in den ungeradzahligen Zeilen eines Bildes darstellt werden. Bei Darstellung einer Folge zeilenverkämmter Halbbilder, bei der pro Bild nur jede zweite Zeile beschrieben wird, resultiert aus diesem Verfahren die aus Figur 5a ersichtliche Darstellung des in Figur 4a dargestellten Zeichens "A", wobei HB1 das Halbbild bezeichnet, in dem Bildinformationen in den geradzahligen Zeilen dargestellt sind, und wobei HB2 das Halbbild bezeichnet, in dem Bildinformationen in den ungeradzahligen Zeilen dargestellt sind.

Figur 5b zeigt die Darstellung des Zeichens gemäß Figur 4a der Darstellung einer Vollbildfolge auf der Anzeigevorrichtung, wenn also Bildinformationen in allen Bildzeilen des Bildes dargestellt sind.

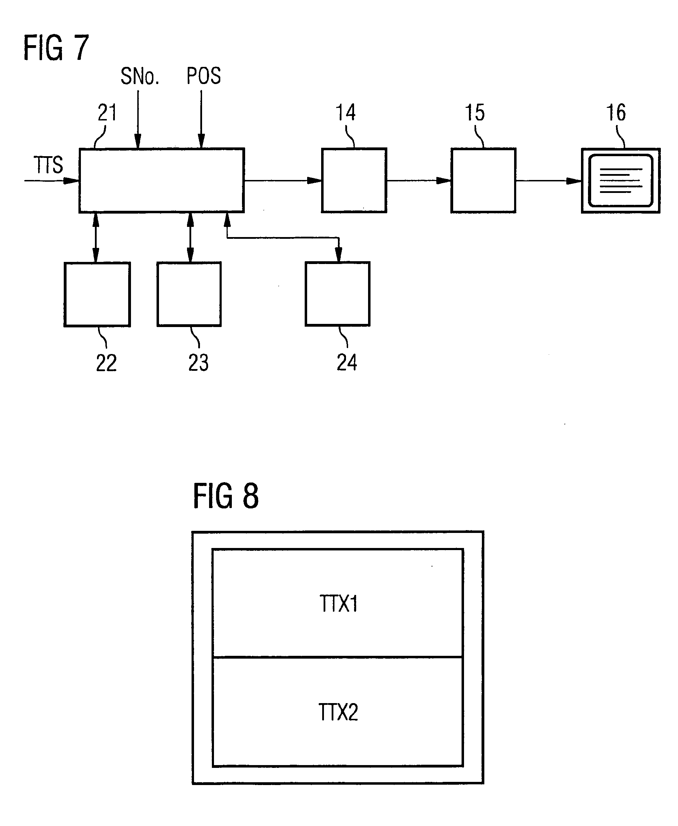

Das erfindungsgemäße Verfahren ermöglicht eine Verdopplung der Auflösung des Bildes in vertikaler Richtung, so dass zwei Teletextseiten in vertikaler Richtung übereinanderliegend darstellbar sind, wie dies in Figur 8 dargestellt ist, wobei für eine Teletextseite mit 24 Teletextreihen bei Verwendung eines ersten Zeichensatzes mit m x n = 12 x 10 Bildpunkten lediglich 240 Bildzeilen benötigt werden.

Zur Realisierung dieses Darstellungsverfahrens kann beispielsweise ein zeilenweise organisierter Speicher vorgesehen werden, in dem die Bildinformationen der zur Darstellung der Teletextseiten ausgewählten Teletextzeichen abgespeichert sind. Die in dem Speicher abgespeicherten Bildinformationen stellen ein Abbild des darzustellenden Bildes dar, wobei der Speicher angepasst an die Anzeigevorrichtung mit der Frequenz ausgelesen wird, mit der die Anzeigevorrichtung die einzelnen Zeilen des Bildes beschreibt. Zur Darstellung einer Halbbildfolge auf der Anzeigevorrichtung wird dabei nur jeweils jede zweite "Speicherzeile" ausgelesen, woraus eine Darstellung eines einzelnen Zeichens entsprechend der Darstellung in Figur 5a resultiert, wobei sich bei einer ausreichend großen Bildfrequenz die einzelnen Teile eines Zeichens für das menschliche Auge zu einem Zeichen zusammenfügen. Zur Darstellung einer Vollbildfolge wird für jedes darzustellende Bild jede Speicherzeile des Speichers ausgelesen, woraus eine Darstellung eines einzelnen Zeichens gemäß Figur 5b resultiert.

Wie erläutert, wird der Speicher angepasst an die Bildwiederholfrequenz, beispielsweise 50Hz oder 100Hz, der Anzeigevorrichtung ausgelesen. Aktualisiert werden muss der Speicher selbstverständlich nur dann, wenn eine neue Teletextseite dargestellt werden soll und hierfür vorher in dem Speicher abgespeichert wird.

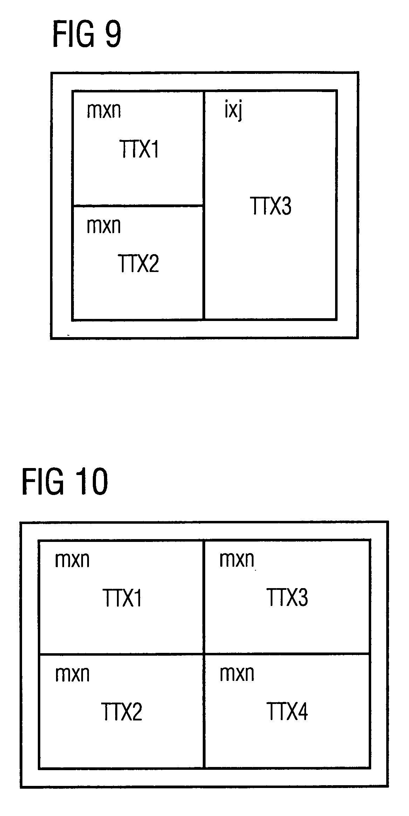

Bei einer Abwandlung des erfindungsgemäßen Verfahrens ist vorgesehen, vier Teletextseiten in einem Bild, und zwar eine Teletextseite pro Quadrant darzustellen, wie dies im Ergebnis in Figur 10 dargestellt ist. Figur 10 zeigt schematisch ein Bild, in dem jeweils zwei Teletextseiten TTX1, TTX2 bzw. TTX3, TTX4 in vertikaler Richtung des Bildes übereinander und jeweils in horizontaler Richtung nebeneinander dargestellt sind. Die einzelnen Teletextseiten TTX1-TTX4 sind jeweils reihenweise aus Zeichen des ersten Zeichensatzes mit m x n Bildpunkten aufgebaut, wobei auch hierbei erste Zeilen der aus dem ersten Zeichensatz ausgewählten verwendeten Zeichen in ersten Zeilen des Bildes und zweite Zeilen der Matrix in zweiten Zeilen des Bildes dargestellt werden.

Zur Realisierung eines solchen Verfahrens wird vorzugsweise ein zeilenweise organisierter Speicher vorgesehen, der dazu ausgebildet ist, Bildinformationen zu vier Teletextseiten zu speichern, der also die doppelte Speicherkapazität wie ein zur Darstellung des Bildes in Figur 8 benötigter Speicher besitzt. In diesem Speicher werden die ausgewählten Zeichen, bzw. die zugehörigen Bildinformationen zeilenweise entsprechend ihrer Darstellung auf dem Bildschirm abgelegt. Davon ausgehend, dass eine Teletextreihe k Zeichen umfasst, die aus jeweils m x n Bildpunkten bestehen, werden in einer Zeile des Speichers Bildinformationen zu 2·k·m Bildpunkten abgespeichert, wobei der Speicher abgestimmt auf die Wiederholfrequenz des darzustellenden Bildes so ausgelesen wird, dass während einer Zeitdauer, während der eine Bildzeile des darzustellenden Bildes beschrieben wird, eine Speicherzeile ausgelesen wird. Die einzelnen Zeichen erscheinen in dem Bild gemäß Figur 10 in horizontaler Richtung gegenüber den einzelnen Zeichen in dem Bild gemäß Figur 8 gestaucht unter der Annahme, dass die Dimensionen der beiden Bilder gleich sind.

Der zu verwendende Speicher ist sowohl für die Darstellung des Bildes in Figur 8 als auch für die Darstellung des Bildes in Figur 9, die jeweils zwei untereinander dargestellte Teletextseiten umfassen, unter der Annahme, dass eine Teletextseite 1 Teletextreihen umfasst, dazu ausgebildet, Bildinformationen zu 2·l·n Bildzeilen zu speichern.

Bei einer weiteren Ausführungsform des erfindungsgemäßen Verfahrens ist vorgesehen, neben zwei übereinander dargestellten ersten und zweiten Teletextseiten TTX1, TTX2 genau eine dritte Teletextseite TTX3 in dem Bild horizontal neben der ersten und zweiten Teletextseite TTX1, TTX2 darzustellen.

Hierfür ist vorgesehen, die darzustellenden Zeichen der ersten und zweiten Teletextseite TTX1, TTX2 aus dem ersten Zeichensatz auszuwählen, der Zeichen mit m x n Bildpunkten umfasst, und die darzustellenden Zeichen des dritten Bildes aus einem zweiten Zeichensatz auszuwählen, der jeweils Zeichen mit i x j Bildpunkten umfasst, wobei vorzugsweise m=i und j=2·n gilt.

Figur 4b zeigt beispielhaft die Bildpunktmatrix des Teletextzeichens "A" des zweiten Zeichensatzes, die 12 x 20 Bildpunkte umfasst, wobei in dem dargestellten Beispiel das in Figur 4b dargestellte Zeichen des zweiten Zeichensatzes aus dem in Figur 4a dargestellten Zeichen des ersten Zeichensatzes daraus hervorgegangen ist, dass die Bildpunktinformationen einer Zeile des Zeichens in Figur 4a in zwei aufeinanderfolgenden Zeilen des Zeichens in Figur 4b wiedergegeben sind, woraus bei dem Zeichen des zweiten Zeichensatzes eine Verdopplung der Anzahl der Bildpunktzeilen gegenüber der Anzahl der Bildpunktzeilen des Zeichens des ersten Zeichensatzes resultiert. Zur Darstellung dieses Zeichens in einem zeilenweise aufgebauten Bild werden erste Zeilen der Bildpunktmatrix, beispielsweise geradzahlige Zeilen, in geradzahligen Zeilen des Bildes dargestellt, und zweite Zeilen der Bildpunktmatrix, beispielsweise ungeradzahlige Zeilen, werden in ungeradzahligen Zeilen des Bildes dargestellt.

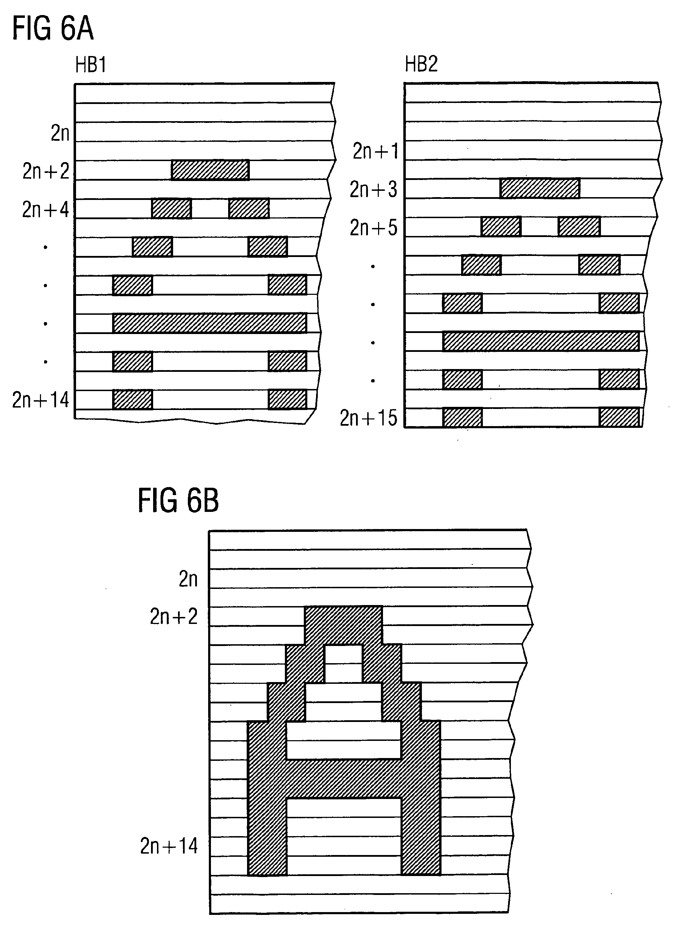

Figur 6a zeigt die Darstellung des Zeichens gemäß Figur 4b des zweiten Zeichensatzes anhand eines Bildausschnittes bei Darstellung einer zeilenverkämmten Halbbildfolge auf der Anzeigevorrichtung wobei HB1 entsprechend Figur 5a das Halbbild ist, in dem Bildinformationen in den geradzahligen Zeilen dargestellt werden, und wobei HB2 das Halbbild ist, in dem Bildinformationen in den ungeradzahligen Zeilen dargestellt werden.

Figur 6b zeigt entsprechend das Zeichen gemäß Figur 4b bei Darstellung einer Vollbildfolge auf der Anzeigevorrichtung.

Zur Realisierung dieses Verfahrens wird ein Speicher entsprechend des Speichers zur Darstellung eines Bildes in Figur 10 benötigt. Für die Darstellung der dritten Teletextseite werden wegen der verwendeten Zeichen des zweiten Zeichensatzes doppelt so viele Bildzeilen wie für die Darstellung der ersten oder zweiten Teletextseite benötigt. Unter der Annahme, dass eine Teletextzeile aus k Reihen 1 Spalten besteht, wird ein Speicher zur Speicherung von 2·k·m x 2·l·n Bildpunktinformationen benötigt, wobei eine 2·k·m Bildpunktinformationen umfassende Speicherzeile des Speichers während einer Zeitdauer ausgelesen wird, während der eine Zeile des darzustellenden Bildes beschrieben wird.

Figur 7 zeigt schematisch eine Teletextverarbeitungseinrichtung zur Durchführung des erfindungsgemäßen Verfahrens, wobei der Vorrichtung ein aus einem FBAS-Signal abgetrenntes Teletextsignal TTS zugeführt ist. Die Vorrichtung umfasst eine Dekodiereinrichtung 21, an die ein Seitenspeicher 22 angeschlossen ist, in dem die in dem Teletextsignal TTS enthaltenen Teletextinformationen seitenweise abgespeichert werden können, wobei die einzelnen Zeichen einer Teletextseite beispielsweise binär kodiert in dem Speicher abgelegt werden. Der Dekodiereinheit 21 ist ein Seitenauswahlsignal SNo zuführbar, welches die auf der Anzeigevorrichtung 16 darzustellende, in dem Speicher 22 abgelegte Teletextseite bestimmt. Außerdem ist der Dekodiereinheit 21 ein Positionssignal POS zuführbar, das angibt, wie viele Teletextseiten auf einem Bild der Anzeigevorrichtung 16 dargestellt werden sollen und an welchen Positionen sich diese einzelnen Teltextseiten befinden sollen. Durch dieses Positionssignal POS kann beispielsweise bestimmt werden, zwei Teletextseiten in vertikaler Richtung übereinander in einem Bild der Anzeigevorrichtung 16 darzustellen. Der Dekodiereinheit 21 ist ein Speicher 23, 24 zugeordnet, der in dem Ausführungsbeispiel aus zwei Speicherblöcken 23, 24 gebildet ist, wobei in jedem dieser Speicherblöcke 23, 24 einer der beiden unterschiedlichen Zeichensätze abgespeichert ist, die entweder Zeichen mit m x n oder Zeichen mit i x j Bildpunkten enthalten.

Die Dekodiereinheit 21 ist dazu ausgebildet, abhängig von dem Seitenauswahlsignal Sno, das auch die Seitenzahlen mehrerer darzustellender Teletextseiten bestimmten kann, die Daten der jeweiligen Teletextseiten aus dem Speicher 22 auszulesen, den ausgelesenen kodierten Teletextdaten entweder Zeichen des ersten Zeichensatzes aus dem ersten Speicherblock oder Zeichen des zweiten Zeichensatzes aus dem zweiten Speicherblock 24 zuzuordnen und die daraus entstehende Matrix mit Bildpunktinformationen in der der Dekodiereinheit 21 nachgeschalteten Speichereinheit 14 abzuspeichern. Gibt das Positionssignal POS an, dass zwei Teletextseiten übereinander dargestellt werden sollen, wie dies beispielhaft in Figur 8 dargestellt ist, so liest die Dekodiereinheit 21 die kodierten Daten dieser Teletextseiten aus dem Seitenspeicher 22 aus und ordnet den einzelnen Daten Zeichen des ersten Zeichensatzes aus dem ersten Speicherblock 23 zu und lädt die daraus resultierenden Bildpunktinformationen in den Speicher 14. Dieser Speicher 14 wird durch eine die Anzeigevorrichtung 16 ansteuernde Einheit 15 zur Darstellung der Bildpunktinformationen auf dem Bildschirm 16 ausgelesen und ist beispielsweise in der oben erläuterten Weise zeilenweise organisiert. Der Speicher 14 ist vorzugsweise dynamisch erweiterbar, um je nach darzustellendem Bild k·m x 2·l·n Bildpunktinformationen zur Darstellung eines Bildes gemäß Fiur 8 oder 2·k·m x 2·l·n Bildpunktinformationen zur Darstellung von Bildern gemäß der Figuren 9 oder 10 abspeichern zu können.

### Bezugszeichenliste

- 10: Abtrenneinrichtung
- 11: Dekodiereinheit
- 12: Seitenspeicher
- 13: Zeichenspeicher
- 14: Speichereinheit
- 15: Ansteuereinrichtung
- 16: Anzeigevorrichtung
- 21: Dekodiereinheit
- 22: Seitenspeicher
- 23, 24: Zeichenspeicher
- FBAS: Videosignal
- POS: Positionssignal
- Sno: Seitennummer
- TTS: Teletextsignal
- TTX1-TTX3: Teletextseiten

## Patentansprüche

1. Verfahren zur Darstellung von Teletextinformationen einer ersten und einer zweiten Teletextseite in vertikaler Richtung übereinanderliegend in einem bildpunktweise aufgebauten Bild einer Anzeigevorrichtung, wobei das Verfahren folgende Verfahrensschritte umfasst:
- Bereitstellen eines Teletextsignals (TTS), das eine Folge kodierter Teletextzeichen umfasst,
- Bereitstellen eines ersten Zeichensatzes mit einer Anzahl Zeichen, die jeweils aus einer Matrix mit m x n Bildpunkten aufgebaut sind
- Auswählen eines einem jeden kodierten Teletextzeichen zugeordneten Zeichens aus dem ersten Zeichensatz,
- Darstellen der ausgewählten Zeichen bildpunktweise auf der Anzeigevorrichtung (16), wobei für die Darstellung eines Zeichens auf der Anzeigevorrichtung in den geradzahligen Zeilen des Bildes Bildpunktinformationen aus ersten Zeilen der Bildpunktmatrix des Zeichens dargestellt werden und bei dem in den ungeradzahligen Zeilen des Bildes Bildpunktinformationen aus zweiten Zeilen der Bildpunktmatrix des Zeichens dargestellt werden.

2. Verfahren nach Anspruch 1, das zur Darstellung von Teletextinformationen einer dritten Teletextseite in horizontaler Richtung des Bildes benachbart zu der ersten und zweiten Teletextseite folgende Verfahrensschritte umfasst:
- Bereitstellen eines zweiten Zeichensatzes mit einer Anzahl Zeichen, die aus jeweils einer Matrix i x j Bildpunkten aufgebaut sind,
- Auswählen eines einem jeden kodierten Teletextzeichen zugeordneten Zeichens der dritten Teletextseite aus dem zweiten Zeichensatz,
- wobei für die Darstellung eines Zeichens der dritten Teletextseite auf der Anzeigevorrichtung in den geradzahligen Zeilen des Bildes Bildpunktinformationen aus ersten Zeilen der Bildpunktmatrix des Zeichens dargestellt werden und bei dem in den ungeradzahligen Zeilen des Bildes Bildpunktinformationen aus zweiten Zeilen der Bildpunktmatrix des Zeichens dargestellt werden.

3. Verfahren nach Anspruch 1 oder 2, bei dem die ersten und zweiten Zeilen der Bildpunktmatrix des Zeichens abwechselnd angeordnet sind.

4. Verfahren nach einem der Ansprüche 1 bis 3, bei dem m=i und n=2·j ist.

5. Verfahren nach Anspruch 4, bei dem m=i=12 und j=10 ist.
